# EUROPEAN PATENT APPLICATION

(11) **EP 4 664 653 A1**
(43) Date of publication of application: **17.12.2025**
(21) Application number: 23927959.9
(22) Date of filing: 20.03.2023
(51) Int. Cl.: H01M 50/451

(54) **COMPOSITE SEPARATOR, SECONDARY BATTERY, AND ELECTRIC APPARATUS**

(71) Applicant: Contemporary Amperex Technology (Hong Kong) Limited, Hong Kong (HK)
(72) Inventor: TAN, Xianming, Ningde, Fujian 352100 (CN); WEN, Yan, Ningde, Fujian 352100 (CN); QIN, Meng, Ningde, Fujian 352100 (CN); GUAN, Yingjie, Ningde, Fujian 352100 (CN); YANG, Huiling, Ningde, Fujian 352100 (CN); HUANG, Qisen, Ningde, Fujian 352100 (CN)
(74) Representative: Gong, Jinping
(86) International application number: PCT/CN2023/082604
(87) International publication number: WO 2024/192642

(57) **Abstract**

Provided in this application are a composite separator, a secondary battery, and a power consuming apparatus. The composite separator includes a separator substrate and a conductive coating disposed on a side of the separator substrate. The conductive coating in the composite separator is conducive to improving the current density for deposition of metal ions on a negative electrode current collector such that the metal ions are evenly deposited, and is also conducive to reducing an overpotential of a battery including same such that metal dendrites are further alleviated, thereby improving the cycle performance, service life, and safety of the battery.

## Description

### TECHNICAL FIELD

This application relates to the field of secondary battery technologies, and in particular, to a composite separator, a secondary battery, and a power consuming apparatus.

### BACKGROUND

In recent years, secondary batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace.

Metal secondary batteries have attracted significant attention and gradually become a research hotspot in recent years due to advantages of their negative electrodes such as exceptionally high theoretical specific capacity, wide availability of raw materials, and low material costs. However, the safety of metal secondary batteries has long been a challenging technical issue, hindering their widespread application.

### SUMMARY

In view of the foregoing problems, this application is accomplished. An object of this application is to provide a composite separator. The composite separator includes a separator substrate and a conductive coating disposed on a side of the separator substrate, which are conducive to improving the current density for deposition of metal ions on a negative electrode current collector such that the metal ions are evenly deposited, and are also conducive to reducing an overpotential of a battery including same such that metal dendrites are further alleviated, thereby improving the safety and cycle performance of the battery.

A first aspect of this application provides a composite separator. The composite separator includes a separator substrate and a conductive coating disposed on a side of the separator substrate.

The conductive coating is disposed on a side of the separator substrate, which can improve the current density for deposition of metal ions on the negative electrode current collector, thereby reducing an overpotential during the deposition of metal ions, which improves the uniformity of the deposition of metal ions, so that the generation of metal dendrites is reduced, and the safety performance and cycle performance of a battery are improved.

In any embodiment, the composite separator further includes a ceramic coating disposed on at least one side of the separator substrate, and the ceramic coating is disposed between the separator substrate and the conductive coating; and/or
the ceramic coating is disposed on a side of the separator substrate that is away from the conductive coating.

The composite separator further includes the ceramic coating. The ceramic coating can effectively reduce the thermal shrinkage rate of the composite separator such that the thermal stability of the composite separator is improved, to avoid or reduce internal short circuits caused by the shrinkage of the composite separator, thereby significantly improving the safety of the battery.

In any embodiment, the ceramic coating is disposed between the separator substrate and the conductive coating, which can further prevent direct contact between the conductive coating and a positive electrode film layer such that the infiltration of a conductive material into the separator substrate is avoided or reduced, which reduces the self-discharge of the battery and reduces the risk of an internal short circuit in the battery, thereby improving the performance of the battery.

In any embodiment, a thickness of the conductive coating ranges from 0.05 µm to 10 µm, and optionally ranges from 0.5 µm to 5 µm.

The thickness of the conductive coating is controlled within an appropriate range such that the uniformity of ion transport in the conductive coating can be improved, thereby reducing the generation of dendrites, and self-discharge caused by the excessive thickness of the conductive coating can be avoided or reduced. The thickness of the conductive coating is further controlled within 0.5 µm to 5 µm, thereby further improving the performance of the battery.

In any embodiment, an areal density of the conductive coating ranges from 0.01 mg/1540.25 mm² to 15 mg/1540.25 mm², and optionally ranges from 0.05 mg/1540.25 mm² to 8 mg/1540.25 mm².

The areal density of the conductive coating is controlled within an appropriate range, which is conducive to facilitating the uniform transport and deposition of metal ions.

In any embodiment, the conductive coating includes a conductive material, and the conductive material includes at least one of a conductive carbon material and a conductive polymer.

The conductive material in the conductive coating has a sufficient electronic conductivity, which is conducive to reducing an overpotential for the deposition of metal ions, thereby facilitating the uniform deposition of metal ions such that metal dendrites are further alleviated, ultimately improving the cycle performance and service life of the battery.

In any embodiment, the conductive carbon material includes at least one of a zero-dimensional carbon material, a one-dimensional carbon material, and a two-dimensional carbon material, and optionally includes the one-dimensional carbon material.

In any embodiment, the zero-dimensional carbon material includes at least one of acetylene black, Super P, and Ketjen black;
the one-dimensional carbon material includes at least one of carbon nanofibers, carbon nanotubes, carbon nanohorns, and carbon nanorods, and optionally includes carbon nanotubes; and
the two-dimensional carbon material includes at least one of natural graphite and artificial graphite.

The conductive materials all have excellent electrical conductivity, which is conducive to reducing an overpotential for the deposition of metal ions, thereby facilitating the uniform deposition of metal ions, ultimately alleviating metal dendrites.

In any embodiment, a thickness of the ceramic coating ranges from 0.05 µm to 10 µm, and optionally ranges from 0.5 µm to 3 µm.

The ceramic coating is controlled within an appropriate thickness range such that the thermal shrinkage rate of the composite separator can be reduced, thereby improving the safety of the battery, and a decrease in the energy density of the battery caused by the excessive thickness of the ceramic coating can be avoided or reduced.

In any embodiment, an areal density of the ceramic coating ranges from 0.0001 mg/1540.25 mm² to 0.05 mg/1540.25 mm², and optionally ranges from 0.001 mg/1540.25 mm² to 0.02 mg/1540.25 mm².

The areal density of the ceramic coating is controlled within an appropriate range, which is conducive to reducing the thermal shrinkage rate of the composite separator, thereby avoiding or reducing internal short circuits, and also does not affect the transport behavior of metal ions.

In any embodiment, the ceramic coating includes an inorganic material, and the inorganic material includes one or more of Al₂O₃, AlO(OH), SiO₂, TiO₂, MgO, and CaO, and optionally includes Al₂O₃.

The inorganic materials all have excellent thermal stability, which is conducive to reducing the thermal shrinkage rate of the composite separator, thereby improving the performance of the composite separator.

In any embodiment, the conductive coating and/or the ceramic coating further includes a binder, and the binder includes one or more of polyvinylidene fluoride (PVDF), carboxymethylcellulose sodium, styrene-butadiene rubber (SBR), potassium carboxymethyl cellulose, polyacrylate, polyamide, polyimide, polyamide-imide, sodium alginate (SA), polyvinyl alcohol (PVA), polytetrafluoroethylene (PTFE), and polyacrylonitrile, and optionally includes PVDF.

The binders are all conducive to bonding between the conductive coating/ceramic coating and the separator substrate or between the conductive coating and the ceramic coating, thereby improving the stability of the composite separator.

In any embodiment, the binder in the conductive coating is the same as the binder in the ceramic coating.

The binder in the conductive coating is the same as the binder in the ceramic coating, which is conducive to the compatibility between the conductive coating and the ceramic coating, thereby avoiding or reducing a further increase in the interface resistance between the conductive coating and the ceramic coating.

In any embodiment, a mass ratio of the conductive material to the binder in the conductive coating ranges from 4 to 49.

The mass ratio of the conductive material to the binder in the conductive coating is controlled within an appropriate range, which can achieve a balance between performance and production costs of the composite separator.

In any embodiment, a mass ratio of the inorganic material to the binder in the ceramic coating ranges from 4 to 40.

The mass ratio of the inorganic material to the binder in the ceramic coating is controlled within an appropriate range, which can achieve a balance between performance and production costs of the composite separator.

In any embodiment, the separator substrate includes one or more of polyethylene (PE), polypropylene (PP), polyester, cellulose, polyimide, polyamide, spandex fibers, and aramid fibers, and optionally includes PE.

The separator substrate uses readily available materials. The separator substrates can all be used in combination with the conductive coating to improve the performance of the battery.

In any embodiment, the separator substrate includes PE, the ceramic coating includes Al₂O₃, and the conductive coating includes carbon nanotubes.

The combination of PE, Al₂O₃, and carbon nanotubes endows the composite separator with excellent performance.

In any embodiment, in any direction perpendicular to a thickness direction of the composite separator, a width of the conductive coating is less than a width of the separator substrate.

In any direction perpendicular to the thickness direction of the composite separator, the width of the conductive coating is less than the width of the separator substrate. The separator with the larger width can avoid contact between the conductive coating and the positive electrode film layer, thereby reducing the risk of a safety accident caused by an internal short circuit in the battery.

In any embodiment, in any direction perpendicular to the thickness direction of the composite separator, the width of the conductive coating is less than or equal to a width of the ceramic coating, and the width of the ceramic coating is less than or equal to the width of the separator substrate.

In any direction perpendicular to the thickness direction of the composite separator, it is controlled that the width of the conductive coating is less than or equal to a width of the ceramic coating, and the width of the ceramic coating is less than or equal to the width of the separator substrate, which can effectively achieve a balance between the electrochemical performance and safety of the battery. A second aspect of this application provides a secondary battery, including a negative electrode plate and the composite separator in the first aspect, where the conductive coating in the composite separator is disposed on a side facing the negative electrode plate.

The conductive coating is disposed on the side facing the negative electrode plate, which is conducive to improving the current density on the negative electrode current collector, and reducing an overpotential for the deposition of metal ions, thereby alleviating metal dendrites.

In any embodiment, the secondary battery is an anode-free sodium secondary battery.

The anode-free sodium secondary battery has a high energy density.

In any embodiment, the negative electrode plate includes a negative electrode current collector, and in any direction perpendicular to the thickness direction of the composite separator, the width of the conductive coating is less than or equal to a width of the negative electrode current collector, and the width of the negative electrode current collector is less than the width of the separator substrate.

In any direction perpendicular to the thickness direction of the composite separator, it is controlled that the width of the conductive coating is less than or equal to the width of the negative electrode current collector, and the width of the negative electrode current collector is less than the width of the separator substrate, which facilitates the complete deposition of metal ions onto the negative electrode current collector after the metal ions pass through the conductive layer in the composite separator, and can avoid contact with the positive electrode film layer by the negative electrode current collector and the conductive coating, thereby avoiding a safety accident caused by an internal short circuit.

In any embodiment, the secondary battery further includes a positive electrode plate, and the positive electrode plate includes a positive electrode current collector and a positive electrode film layer disposed on a side of the positive electrode current collector that faces the composite separator; and
in any direction perpendicular to the thickness direction of the composite separator, a width of the positive electrode film layer is less than the width of the conductive coating, and the width of the conductive coating is less than the width of the separator substrate.

In any direction perpendicular to the thickness direction of the composite separator, the width of the positive electrode film layer is less than the width of the conductive coating, and the width of the conductive coating is less than the width of the separator substrate, which is conducive to precipitation of metal ions during charging and discharging and subsequent complete deposition of metal ions onto the negative electrode current collector after the metal ions pass through a conductive layer in the composite separator, and can avoid contact between the conductive coating and the positive electrode film layer, thereby avoiding a safety accident caused by an internal short circuit.

In any embodiment, in any direction perpendicular to the thickness direction of the composite separator, a difference between the width of the conductive coating and the width of the positive electrode film layer ranges from 0 mm to 6 mm, a difference between the width of the negative electrode current collector and the width of the conductive coating ranges from 0 to 3 mm, and a difference between the width of the separator substrate and the width of the negative electrode current collector ranges from 1 mm to 9 mm.

The difference between the width of the conductive coating and the width of the positive electrode film layer, the difference between the width of the negative electrode current collector and the width of the conductive coating, and the difference between the width of the separator substrate and the width of the negative electrode current collector are controlled within appropriate ranges, which can achieve a balance between performance and production costs of the battery.

In any embodiment, the composite separator includes the ceramic coating, and in any direction perpendicular to the thickness direction of the composite separator, the width of the separator substrate is equal to the width of the ceramic coating.

In any direction perpendicular to the thickness direction of the composite separator, it is controlled that the width of the separator substrate is equal to the width of the ceramic coating, thereby further reducing the thermal shrinkage rate of the composite separator, and avoiding a safety accident caused by an internal short circuit.

A third aspect of this application provides a power consuming apparatus, including the secondary battery in the second aspect of this application.

### BRIEF DESCRIPTION OF THE DRAWINGS

FIG. 1 is a schematic diagram of a secondary battery according to an embodiment of this application;
FIG. 2 is an exploded view of the secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to an embodiment of this application shown in FIG. 4; and
FIG. 6 is a schematic diagram of a power consuming apparatus powered by a secondary battery according to an embodiment of this application.

### Reference numerals:

1. battery pack; 2. upper box; 3. lower box; 4. battery module; 5. secondary battery; 51. case; 52. electrode assembly; and 53 cover plate.

### DETAILED DESCRIPTION

Hereinafter, embodiments of a composite separator, a secondary battery, and a power consuming apparatus of this application are specifically disclosed in the detailed description with reference to the accompanying drawings as appropriate. However, there may be situations where unnecessary detailed explanations may be omitted. For example, there are situations where detailed explanations of well-known matters are omitted and repeated explanations of the same structure are actually provided. Thus, the following description does not become unnecessarily lengthy, which facilitates the easy comprehension of those skilled in the art. In addition, the accompanying drawings and the following explanations are provided for those skilled in the art to fully understand this application and are not intended to limit the subject matter recorded in the claims.

The "scope" disclosed in this application is limited in the form of a lower limit and an upper limit. The given scope is limited by selecting a lower limit and an upper limit, and the selected lower limit and upper limit limit the boundary of the special scope. The range limited in this way can include or exclude end values, and can be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if the minimum range values 1 and 2 are listed, and if the maximum range values 3, 4, and 5 are listed, the following ranges can all be expected: 1-3, 1-4, 1-5, 2-3, 2-4, and 2-5. In this application, unless otherwise specified, the numerical range "a to b" represents an abbreviated representation of any combination of real numbers between a and b, where a and b are both real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of this application can be combined with each other form new technical solutions.

Unless otherwise specified, all technical features and optional technical features of this application can be combined with each other to form new technical solutions.

Unless otherwise specified, all the steps in this application can be performed in the order described or in random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

If there is no special explanation, the terms "including/comprising" mentioned in this application indicate open inclusion or closed inclusion. For example, "include" and "comprise" may mean that other components not listed may or may not further be included or comprised.

If not specifically stated, in this application, the term "or" is inclusive. For example, the phrase "A or B" means "A, B, or both A and B. More specifically, any one of the following conditions meets the condition "A or B": A is true (or present) and B is false (or not present); A is false (or not present) and B is true (or present); or both A and B are true (or present). In this disclosure, the phrases "at least one of A, B, and C" and "at least one of A, B, or C" both mean only A, only B, only C, or any combination of A, B, and C.

Currently metal batteries face multiple problems. An anode-free sodium battery is used as an example. During charging and discharging, nonuniform current density on a negative electrode current collector leads to nonuniform deposition of sodium ions, and as a result sodium dendrites tend to form. This severely affects the service life and safety of the battery, making it impossible to meet the requirements of next-generation battery systems.

### [Composite separator]

Based on this, this application provides a composite separator. The composite separator includes a separator substrate and a conductive coating disposed on a side of the separator substrate.

The conductive coating improves the current density for deposition of metal ions on a negative electrode current collector and reduces an overpotential for the deposition of metal ions, thereby facilitating the uniform deposition of metal ions such that dendrites on a negative electrode are alleviated, and ultimately improving the safety performance and cycle performance of a battery.

A metal battery is used as an example. The conductive coating is disposed on a side of the separator substrate that faces a negative electrode plate. During charging, metal ions first pass through the separator substrate, then pass through the conductive coating, and are deposited on the surface of the negative electrode current collector, preferentially filling tiny gaps between the negative electrode current collector and the conductive coating to make the deposition of metal more compact, thereby reducing the formation of metal dendrites.

In some embodiments, the composite separator further includes a ceramic coating disposed on at least one side of the separator substrate, and the ceramic coating is disposed between the separator substrate and the conductive coating; and/or the ceramic coating is disposed on a side of the separator substrate that is away from the conductive coating.

In some embodiments, the composite separator includes a ceramic coating disposed between the separator substrate and the conductive coating.

In some embodiments, the composite separator includes a ceramic coating disposed on a side of the separator substrate that is away from the conductive coating.

In some embodiments, the composite separator includes two ceramic coatings. One ceramic coating is a ceramic coating disposed between the separator substrate and the conductive coating, and the other ceramic coating is a ceramic coating disposed on a side of the separator substrate that is away from the conductive coating.

The composite separator further includes the ceramic coating. The ceramic coating can effectively reduce the thermal shrinkage rate of the composite separator such that the thermal stability of the composite separator is improved, to avoid or reduce internal short circuits caused by the shrinkage of the composite separator, thereby significantly improving the safety of the battery.

In some embodiments, the ceramic coating is disposed between the separator substrate and the conductive coating, which can further prevent direct contact between the conductive coating and a positive electrode film layer such that the infiltration of a conductive material into the separator substrate is avoided or reduced, which reduces the self-discharge of the battery and reduces the risk of an internal short circuit in the battery, thereby improving the performance of the battery.

In some embodiments, a thickness of the conductive coating ranges from 0.05 µm to 10 µm, and optionally ranges from 0.5 µm to 5 µm. In some embodiments, the thickness of the conductive coating is optionally 0.05 µm, 0.1 µm, 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or a value in a range formed by any two of the above points.

The thickness of the conductive coating is controlled within an appropriate range such that the requirement for uniform dispersion of metal ion transport of the conductive coating can be met, and a subsequent adverse impact caused to the battery by the conductive coating can be avoided or reduced.

The thickness of the conductive coating is further controlled within 0.5 µm to 5 µm, thereby further improving the performance of the battery.

In some embodiments, an areal density of the conductive coating ranges from 0.01 mg/1540.25 mm² to 15 mg/1540.25 mm², and optionally ranges from 0.05 mg/1540.25 mm² to 8 mg/1540.25 mm². In some embodiments, the areal density of the conductive coating is optionally 0.01 mg/1540.25 mm², 0.05 mg/1540.25 mm², 0.1 mg/1540.25 mm², 0.5 mg/1540.25 mm², 1 mg/1540.25 mm², 1.5 mg/1540.25 mm², 2 mg/1540.25 mm², 2.5 mg/1540.25 mm², 3 mg/1540.25 mm², 3.5 mg/1540.25 mm², 4 mg/1540.25 mm², 4.5 mg/1540.25 mm², 5 mg/1540.25 mm², 5.5 mg/1540.25 mm², 6 mg/1540.25 mm², 6.5 mg/1540.25 mm², 7 mg/1540.25 mm², 7.5 mg/1540.25 mm², 8 mg/1540.25 mm², 9 mg/1540.25 mm², 10 mg/1540.25 mm², 11 mg/1540.25 mm², 12mg/1540.25 mm², 13 mg/1540.25 mm², 14 mg/1540.25 mm², 15 mg/1540.25 mm², or a value in a range formed by any two of the above points.

The areal density of the conductive coating may be tested using any well-known method, including, but not limited to, the following methods. For example, during an areal density test, a composite separator (the composite separator includes only a separator substrate and a conductive coating) with a specified area is taken at ambient temperature. A punching machine is used to punch a circular hole in the composite separator, with the area of the circular hole being 1540.25 mm². The mass m1 (unit: mg) of the circular hole section is then measured using an electronic balance. The separator substrate (a blank separator substrate) is then punched in the same manner, and the mass m2 (unit: mg) of the punched section is measured using the electronic balance. (ml-m2) mg/1540.25 mm² is the areal density of the conductive coating.

The areal density of the conductive coating is controlled within an appropriate range, which is conducive to facilitating the uniform deposition of metal ions, and also does not affect the transport behavior of metal ions.

In some embodiments, the conductive coating includes a conductive material, and the conductive material includes at least one of a conductive carbon material and a conductive polymer.

The term "conductive polymer" herein may include an intrinsically conductive polymer and a composite conductive polymer. Generally, the intrinsically conductive polymer means that the molecular structure of the polymer contains a conjugated long-chain structure, and delocalized π-electrons on double bonds can migrate along molecular chains to form electric current, thereby endowing the polymer structure with inherent electrical conductivity. The composite conductive polymer means that a conductive substance (for example, carbon black, carbon nanotubes, graphene, and metal) is filled in a polymer substrate (for example, PE, PP, and polystyrene (PS)).

The conductive material in the conductive coating has a sufficient electronic conductivity, which is conducive to reducing an overpotential for the deposition of metal ions, thereby facilitating the uniform deposition of metal ions such that metal dendrites are further alleviated, ultimately improving the cycle performance and service life of the battery.

In some embodiments, the conductive material includes a conductive carbon material.

In some embodiments, the conductive material includes a conductive polymer.

In some embodiments, the conductive material includes a conductive carbon material and a conductive polymer.

In some embodiments, the conductive carbon material includes at least one of a zero-dimensional carbon material, a one-dimensional carbon material, and a two-dimensional carbon material, and optionally includes the one-dimensional carbon material.

The term "zero-dimensional carbon material" herein is a carbon material with sizes in three dimensions all being less than or equal to 100 nm. As an example, the zero-dimensional carbon material includes, but is not limited to, one or more of Super P, Ketjen black, acetylene black, carbon nanodots, and fullerene.

The term "one-dimensional carbon material" herein is a carbon material with sizes in two dimensions both being less than or equal to 100 nm, and the one-dimensional carbon material can be regarded as a line. As an example, the one-dimensional carbon material includes, but is not limited to, one or more of carbon nanotubes, carbon nanohorns, carbon nanofibers, and carbon nanorods.

The term "two-dimensional carbon material" herein is a carbon material with a size in one dimension being less than or equal to 100 nm, and the two-dimensional carbon material can be regarded as a plane. As an example, the two-dimensional carbon material includes, but is not limited to, graphene and/or graphdiyne.

In some embodiments, the zero-dimensional carbon material includes at least one of acetylene black, Super P, and Ketjen black;
the one-dimensional carbon material includes at least one of carbon nanofibers, carbon nanotubes, carbon nanohorns, and carbon nanorods, and optionally includes carbon nanotubes; and
the two-dimensional carbon material includes at least one of natural graphite and artificial graphite.

The conductive materials all have excellent electrical conductivity, which is conducive to reducing an overpotential for the deposition of metal ions, thereby facilitating the uniform deposition of metal ions, ultimately alleviating metal dendrites.

In some embodiments, a thickness of the ceramic coating ranges from 0.05 µm to 10 µm, and optionally ranges from 0.5 µm to 3 µm. In some embodiments, the thickness of the conductive coating is optionally 0.05 µm, 0.1 µm, 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or a value in a range formed by any two of the above points.

The ceramic coating is controlled within an appropriate thickness range such that the thermal shrinkage rate of the composite separator can be reduced, thereby improving the safety of the battery, and an adverse impact caused to the battery by the excessive thickness of the ceramic coating can be avoided or reduced.

In some embodiments, an areal density of the ceramic coating ranges from 0.0001 mg/1540.25 mm² to 0.05 mg/1540.25 mm², and optionally ranges from 0.001 mg/1540.25 mm² to 0.02 mg/1540.25 mm². In some embodiments, the areal density of the ceramic coating is optionally 0.0001 mg/1540.25 mm², 0.0005 mg/1540.25 mm², 0.001 mg/1540.25 mm², 0.0015 mg/1540.25 mm², 0.002 mg/1540.25 mm², 0.0025 mg/1540.25 mm², 0.003 mg/1540.25 mm², 0.0035 mg/1540.25 mm², 0.004 mg/1540.25 mm², 0.0045 mg/1540.25 mm², 0.005 mg/1540.25 mm², 0.01 mg/1540.25 mm², 0.015 mg/1540.25 mm², 0.02 mg/1540.25 mm², 0.025 mg/1540.25 mm², 0.03 mg/1540.25 mm², 0.035 mg/1540.25 mm², 0.04 mg/1540.25 mm², 0.045 mg/1540.25 mm², 0.05 mg/1540.25 mm², or a value in a range formed by any two of the above points.

The areal density of the ceramic coating may be tested using any well-known method, including, but not limited to, the following methods. For example, the areal density test of the ceramic coating: during the areal density test, a composite separator (the composite separator includes a separator substrate, a ceramic coating, and a conductive coating) with a specified area is taken at ambient temperature. A punching machine is used to punch a circular hole in the separator substrate with the ceramic coating coated on the surface, with the area of the circular hole being 1540.25 mm². The mass m3 (unit: mg) of the circular hole section is then measured using an electronic balance. A composite separator that includes only the separator substrate and the conductive coating is then punched in the same manner, and the mass m4 (unit: mg) of the punched section is measured using the electronic balance. (m3-m4) mg/1540.25 mm² is the areal density of the ceramic coating.

The areal density of the ceramic coating is controlled within an appropriate range, which is conducive to reducing the thermal shrinkage rate of the composite separator, thereby avoiding or reducing internal short circuits, and also does not affect the transport behavior of metal ions.

In some embodiments, the ceramic coating includes an inorganic material, and the inorganic material includes one or more of Al₂O₃, AlO(OH), SiO₂, TiO₂, MgO, and CaO, and optionally includes Al₂O₃.

The inorganic materials all have excellent thermal stability, which is conducive to reducing the thermal shrinkage rate of the composite separator, thereby improving the performance of the composite separator.

In some embodiments, the conductive coating and/or the ceramic coating further includes a binder, and the binder includes one or more of PVDF, carboxymethylcellulose sodium, SBR, potassium carboxymethyl cellulose, polyacrylate, polyamide, polyimide, polyamide-imide, SA, PVA, PTFE, and polyacrylonitrile, and optionally includes PVDF.

The binders are all conducive to bonding between the conductive coating/ceramic coating and the separator substrate or between the conductive coating and the ceramic coating, and do not affect the transport of metal ions.

In some embodiments, the binder in the conductive coating includes PVDF, and the binder in the ceramic coating includes carboxymethylcellulose sodium. In some embodiments, the binder in the conductive coating includes PVDF, and the binder in the ceramic coating includes polyacrylate. In some embodiments, the binder in the conductive coating includes PVDF, and the binder in the ceramic coating includes PVDF.

In some embodiments, the binder in the conductive coating is the same as the binder in the ceramic coating.

The binder in the conductive coating is the same as the binder in the ceramic coating, which is conducive to the compatibility between the conductive coating and the ceramic coating, thereby avoiding or reducing a further increase in the interface resistance between the conductive coating and the ceramic coating.

In some embodiments, a mass ratio of the conductive material to the binder in the conductive coating ranges from 4 to 49. In some embodiments, the mass ratio of the conductive material to the binder in the conductive coating is optionally 4:1, 5:1, 10:1, 15:1, 20:1, 25:1, 30:1, 35:1, 40:1, 45:1, 49:1, or a value in a range formed by any two of the above points.

The mass ratio of the conductive material to the binder in the conductive coating is controlled within an appropriate range, which can achieve a balance between performance and production costs of the composite separator.

In some embodiments, a mass ratio of the inorganic material to the binder in the ceramic coating ranges from 4 to 40. In some embodiments, the mass ratio of the inorganic material to the binder in the ceramic coating is optionally 4:1, 5:1, 10:1, 15:1, 20:1, 25:1, 30:1, 35:1, 40:1, or a value in a range formed by any two of the above points.

The mass ratio of the inorganic material to the binder in the ceramic coating is controlled within an appropriate range, which can achieve a balance between performance and production costs of the composite separator.

In some embodiments, the separator substrate includes one or more of PE, PP, polyester, cellulose, polyimide, polyamide, spandex fibers, and aramid fibers, and optionally includes PE.

The separator substrate uses readily available materials. The separator substrates can all be used in combination with the conductive coating to improve the performance of the battery.

In some embodiments, the separator substrate includes PE, the ceramic coating includes Al₂O₃, and the conductive coating includes carbon nanotubes.

The combination of PE, Al₂O₃, and nanotubes endows the composite separator with excellent performance.

In some embodiments, in any direction perpendicular to a thickness direction of the composite separator, a width of the conductive coating is less than a width of the separator substrate.

In any direction perpendicular to the thickness direction of the composite separator, the width of the conductive coating is less than the width of the separator substrate. The separator completely blocks contact between the conductive coating and the positive electrode film layer, thereby avoiding a safety accident caused by an internal short circuit due to contact between the conductive coating and the positive electrode film layer.

In some embodiments, in any direction perpendicular to the thickness direction of the composite separator, the width of the conductive coating is less than or equal to a width of the ceramic coating, and the width of the ceramic coating is less than or equal to the width of the separator substrate.

In some embodiments, in any direction perpendicular to a thickness direction of the composite separator, the width of the conductive coating is equal to the width of the ceramic coating, and the width of the ceramic coating is less than or equal to the width of the separator substrate.

In some embodiments, in any direction perpendicular to a thickness direction of the composite separator, the width of the conductive coating is less than or equal to the width of the ceramic coating, and the width of the ceramic coating is equal to the width of the separator substrate.

In some embodiments, in any direction perpendicular to a thickness direction of the composite separator, the width of the conductive coating is less than the width of the ceramic coating, and the width of the ceramic coating is less than the width of the separator substrate.

In any direction perpendicular to the thickness direction of the composite separator, it is controlled that the width of the conductive coating is less than or equal to a width of the ceramic coating, and the width of the ceramic coating is less than or equal to the width of the separator substrate, which can effectively achieve a balance between The electrochemical performance and safety of the battery.

### [Positive electrode plate]

The positive electrode plate includes a positive electrode current collector and a positive electrode active substance layer formed on at least part of a surface of the positive electrode current collector. The positive electrode active substance layer includes a positive electrode active substance. The positive electrode active substance may include at least one of layered transition metal oxide, a polyanionic compound, and a Prussian blue compound.

Transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M includes one or more of Ti, V, Mn, Co, Ni, Fe, Cr, and Cu, and 0 < x ≤ 1.

The polyanionic compound may be a type of compound including metal ions, transition metal ions, and tetrahedral (YO₄)ⁿ⁻ anion units. The metal ions are optionally at least one of sodium ions, lithium ions, potassium ions, and zinc ions. The transition metal is optionally at least one of Mn, Fe, Ni, Co, Cr, Cu, Ti, Zn, V, Zr, and Ce; Y is optionally at least one of P, S, and Si; and n represents a valency of (YO₄)ⁿ⁻.

The Prussian blue compound may be a type of compound including sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are independently at least one of Ni, Cu, Fe, Mn, Co, and Zn, and 0 < a ≤ 2, 0 < b < 1, and 0 < c < 1.

The positive electrode active substance layer may further include a conductive agent, thereby improving the electrical conductivity of the positive electrode. The conductive agent is optionally one or more of Super P, acetylene black, carbon black, Ketjen black, carbon dots, carbon nanotubes, graphite, graphene, and carbon nanofibers.

The positive electrode active substance layer may further include a binder, to securely bond the positive electrode active substance and the optional conductive agent to the positive electrode current collector. The binder is optionally at least one of PVDF, PTFE, polyacrylic acid (PAA), PVA, an ethylene vinyl acetate (EVA) copolymer, SBR, carboxymethyl cellulose (CMC), SA, polymethacrylic acid (PMA), and carboxymethyl chitosan (CMCS).

The positive electrode current collector may be a conductive carbon plate, a metal foil, a carbon-coated metal foil, a porous metal plate, or a composite current collector. The conductive carbon material of the conductive carbon plate is optionally one or more of Super P, carbon black, Ketjen black, carbon dots, carbon nanotubes, graphite, graphene, and carbon nanofibers. The metal material of the metal foil, the carbon-coated metal foil, and the porous metal plate are each independently selected at least one from copper, aluminum, nickel, and stainless steel. The composite current collector may be a composite current collector formed by complexing a metal foil with a polymer base film.

In some embodiments, the positive electrode plate may be prepared as follows: dispersing the above components for preparing the positive electrode plate, for example, a positive electrode active material, the conductive agent, the binder, and any other components, in a solvent (for example, N-methylpyrrolidone) to form a positive electrode slurry; and coating the positive electrode slurry on a positive electrode current collector, followed by processes such as drying and cold pressing, to obtain the positive electrode plate.

### [Negative electrode plate]

The negative electrode plate may include only the negative electrode current collector and no negative electrode active material. The negative electrode plate may also have a metal phase pre-deposited on the negative electrode current collector.

In some embodiments, the negative electrode current collector may be a metal foil or a composite current collector. For example, an aluminum foil or copper foil can be used as the metal foil. The composite current collector can include a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a polymer material substrate (such as PP, polyethylene terephthalate (PET), polybutylene terephthalate (PBT), PS, and PE).

### [Electrolyte]

The electrolyte plays a role in conducting ions between the positive electrode plate and negative electrode plate. A type of the electrolyte is not specifically limited in this application, and may be selected as required. For example, the electrolyte may be liquid, gelled, or all solid.

In some embodiments, the electrolyte uses an electrolyte solution. The electrolyte solution includes an electrolyte salt and a solvent.

In some embodiments, the electrolyte salt may be at least one selected from sodium hexafluorophosphate, sodium bis(fluorosulfonyl)imide, sodium bis(trifluoromethanesulfonyl)imide, sodium triflate, sodium tetrafluoroborate, sodium difluorophosphate, sodium perchlorate, and sodium chloride.

In some embodiments, the electrolyte solution includes an ester solvent. The ester solvent includes at least one selected from ethylene carbonate, propylene carbonate, diethyl carbonate, dimethyl carbonate, ethyl methyl carbonate, propyl carbonate, methyl acetate, ethyl propionate, and fluoroethylene carbonate.

In some embodiments, the electrolyte solution includes an ether solvent. The ether solvent includes one or more of ethylene glycol dimethyl ether (DME), ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether, and optionally includes one or more of DME, ethylene glycol diethyl ether, diethylene glycol dimethyl ether, and tetraethylene glycol dimethyl ether.

The ether solvent has more excellent molecular reduction resistance, and can facilitate the formation of a stable solid electrolyte interface on the surface of sodium metal, thereby reducing side reactions in a battery cycle process. Through the combined use of the composite separator and the ether solvent, both the protection of a sodium metal phase in the negative electrode plate by the polymer coating and the formation of the stable solid electrolyte interface are implemented such that side reactions are greatly reduced, thereby improving the performance of the battery. The ether solvent including one or more of DME, ethylene glycol diethyl ether, diethylene glycol dimethyl ether, and tetraethylene glycol dimethyl ether is conducive to further improving the cycle performance and storage performance of the battery.

In some embodiments, the electrolyte solution optionally includes an additive. For example, the additive may include a negative electrode film forming additive, a positive electrode film forming additive, and may further include an additive that can improve particular battery performance, for example, an additive that improves battery overcharging performance, an additive that improves high or low temperature performance of the battery, or the like.

### [Secondary battery]

The secondary battery includes a negative electrode plate and the composite separator in some embodiments. The conductive coating in the composite separator is disposed on a side facing the negative electrode plate.

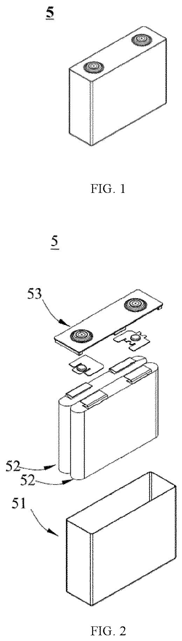

A shape of the secondary battery is not particularly limited in this application, and the secondary battery may be cylindrical, prismatic, or of any other shape. For example, FIG. 1 shows a battery cell 5 of a square structure as an example, and FIG. 2 is an exploded view of the battery cell 5.

In some embodiments, the secondary battery further includes an electrolyte solution.

In some embodiments, the secondary battery is a sodium secondary battery.

A negative electrode material of the sodium secondary battery includes sodium metal and an alloy thereof. The composite separator provided in this application can effectively improve the uniformity of the deposition of sodium ions on the negative electrode, thereby improving the safety of the battery.

In some embodiments, the secondary battery is an anode-free sodium secondary battery.

An anode-free sodium secondary battery refers to a battery formed by not actively disposing a negative electrode active material layer on the negative electrode side during the manufacturing process of the battery. For example, during the manufacturing process of the battery, no sodium metal or carbonaceous active material layer is disposed at the negative electrode by a procedure such as coating or deposition to form a negative electrode active material layer. During the first charging process, sodium ions get electrons at the anode side to deposit metallic sodium on the surface of the current collector to form a sodium metal phase. During the discharging process, metallic sodium can be converted into sodium ions to return to the positive electrode to achieve cyclic charging and discharging. Compared with other sodium secondary batteries, the anode-free sodium secondary battery has no negative electrode active material layer, and can obtain a higher energy density. Moreover, while maintaining a high electrochemical performance of the battery, the production cycle of the battery can be shortened, the manufacturing cost of the battery can be reduced, and the production efficiency can be greatly improved.

In some embodiments, to improve the battery performance, the negative electrode side of the anode-free sodium secondary battery may be provided with some conventional materials that can be used as the negative electrode active material, such as a carbonaceous material, a metal oxide, an alloy, and the like. Although these materials have a certain capacity, due to the small amount of these materials, they are not used as the main negative electrode active material in the battery, so no negative electrode active material layer that implements sodium intercalation is formed. A sodium secondary battery thus formed can still be regarded as an anode-free sodium secondary battery.

In some embodiments, a CB value of the anode-free sodium secondary battery is less than or equal to 0.1.

The CB value is obtained by dividing the capacity per unit area of the negative electrode plate in the secondary battery by the capacity per unit area of the positive electrode plate. Since no negative electrode active material is contained or only a small amount of negative electrode active material is contained in the anode-free battery, the negative electrode plate has a small capacity per unit area, and the CB value of the secondary battery is less than or equal to 0.1.

In some embodiments, the negative electrode plate includes a negative electrode current collector, and in any direction perpendicular to the thickness direction of the composite separator, the width of the conductive coating is less than or equal to a width of the negative electrode current collector, and the width of the negative electrode current collector is less than the width of the separator substrate.

In some embodiments, in any direction perpendicular to the thickness direction of the composite separator, the width of the conductive coating is equal to a width of a negative electrode current collector, and the width of the negative electrode current collector is less than the width of the separator substrate.

In some embodiments, in any direction perpendicular to the thickness direction of the composite separator, the width of the conductive coating is less than a width of a negative electrode current collector, and the width of the negative electrode current collector is less than the width of the separator substrate.

In any direction perpendicular to the thickness direction of the composite separator, it is controlled that the width of the conductive coating is less than or equal to the width of the negative electrode current collector, and the width of the negative electrode current collector is less than the width of the separator substrate, which facilitates the complete deposition of metal ions onto the negative electrode current collector after the metal ions pass through a conductive layer in the composite separator, and can avoid contact with the positive electrode film layer by the negative electrode current collector and the conductive coating, thereby avoiding a safety accident caused by an internal short circuit.

In some embodiments, the secondary battery further includes a positive electrode plate, and the positive electrode plate includes a positive electrode current collector and a positive electrode film layer disposed on a side of the positive electrode current collector that faces the composite separator; and
in any direction perpendicular to the thickness direction of the composite separator, a width of the positive electrode film layer is less than the width of the conductive coating, and the width of the conductive coating is less than the width of the separator substrate.

In any direction perpendicular to the thickness direction of the composite separator, the width of the positive electrode film layer is less than the width of the conductive coating, and the width of the conductive coating is less than the width of the separator substrate, which is conducive to precipitation of metal ions during charging and discharging and subsequent complete deposition of metal ions onto the negative electrode current collector after the metal ions pass through a conductive layer in the composite separator, and can avoid contact between the conductive coating and the positive electrode film layer, thereby avoiding a safety accident caused by an internal short circuit.

In some embodiments, in any direction perpendicular to the thickness direction of the composite separator, a difference between the width of the conductive coating and the width of the positive electrode film layer ranges from 0 mm to 6 mm, a difference between the width of the negative electrode current collector and the width of the conductive coating ranges from 0 to 3 mm, and a difference between the width of the separator substrate and the width of the negative electrode current collector ranges from 1 mm to 9 mm.

In some embodiments, in any direction perpendicular to the thickness direction of the composite separator, the difference between the width of the conductive coating and the width of the positive electrode film layer is optionally 0, 0.5 mm, 1 mm, 1.5 mm, 2 mm, 2.5 mm, 3 mm, 3.5 mm, 4 mm, 4.5 mm, 5 mm, 5.5 mm, 6 mm, or a value in a range formed by any two of the above points, the difference between the width of the negative electrode current collector and the width of the conductive coating is optionally 0, 0.5 mm, 1 mm, 1.5 mm, 2 mm, 2.5 mm, 3 mm, or a value in a range formed by any two of the above points, and the difference between the width of the separator substrate and the width of the negative electrode current collector is 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, or a value in a range formed by any two of the above points.

The difference between the width of the conductive coating and the width of the positive electrode film layer, the difference between the width of the negative electrode current collector and the width of the conductive coating, and the difference between the width of the separator substrate and the width of the negative electrode current collector are controlled within appropriate ranges, which can achieve a balance between performance and production costs of the battery.

In some embodiments, the composite separator includes the ceramic coating, and in any direction perpendicular to the thickness direction of the composite separator, the width of the separator substrate is equal to the width of the ceramic coating.

In any direction perpendicular to the thickness direction of the composite separator, it is controlled that the width of the separator substrate is equal to the width of the ceramic coating, thereby further reducing the thermal shrinkage rate of the composite separator, and avoiding a safety accident caused by an internal short circuit.

In some embodiments, referring to FIG. 2, an outer package may include a case 51 and a cover plate 53. The case 51 may include a bottom plate and a side plate connected to the bottom plate, and an accommodating cavity is enclosed by the bottom plate and the side plate. The case 51 has an opening that communicates with the accommodating cavity, and the cover plate 53 can cover the opening to close the accommodating cavity. The positive electrode plate, the negative electrode plate, and the separator may be wound or stacked to form an electrode assembly 52. The electrode assembly 52 is enclosed in the accommodating cavity. The number of electrode assemblies 52 included in the secondary battery 5 may be one or more, which can be selected by those skilled in the art according to specific actual requirements.

In some embodiments, the secondary battery may be assembled into a battery module. The battery module may include one or more secondary batteries, and the exact number may be selected by those skilled in the art based on usage and capacity of the battery module.

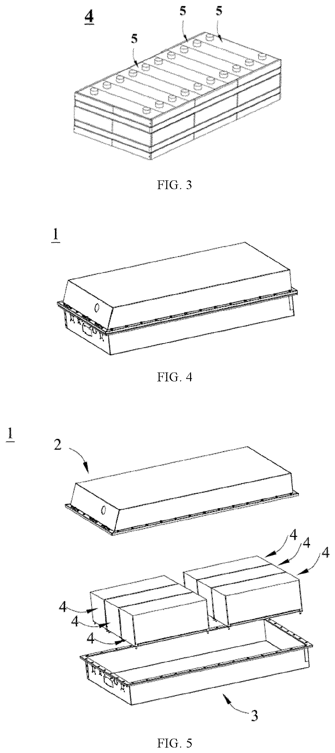

FIG. 3 shows an example of a battery module 4. Referring to FIG. 3, in the battery module 4, a plurality of secondary batteries 5 may be sequentially arranged in a length direction of the battery module 4. Certainly, the multiple battery cells 5 can be arranged in any other way. The plurality of secondary batteries 5 may further be secured by fasteners.

Optionally, the battery module 4 may further include a housing with an accommodating space, and the plurality of secondary batteries 5 are accommodated in the accommodating space.

In some embodiments, the battery module may further be assembled into a battery pack, the number of battery modules contained in the battery pack may be one or more, and the specific number can be selected by those skilled in the art according to the use and capacity of the battery pack.

FIG. 4 and FIG. 5 show an example of a battery pack 1. Referring to FIG. 4 and FIG. 5, the battery pack 1 may include a battery box and multiple battery modules 4 provided in the battery box. The battery box includes an upper box body 2 and a lower box body 3. The upper box body 2 can cover the lower box body 3 to form a closed space for accommodating the battery modules 4. The multiple battery modules 4 may be arranged in the battery box in any manner.

### [Power consuming apparatus]

In an embodiment of this application, a power consuming apparatus is provided, which includes a secondary battery according to any embodiment, a battery module according to any embodiment, or a battery pack according to any embodiment.

The power consuming apparatus includes at least one of the secondary battery, the battery module, or the battery pack provided in this application. The secondary battery, the battery module, or the battery pack can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack can be selected according to the requirements during use.

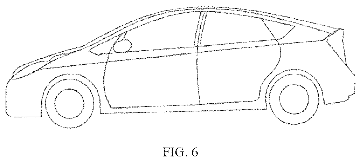

FIG. 6 shows an example of a power consuming apparatus. The power consuming apparatus may be a pure electric vehicle, a hybrid electric vehicle, a plug-in hybrid electric vehicle, or the like. To meet the requirements of the power consuming apparatus for high power and a high energy density of secondary batteries, a battery pack or a battery module may be used.

The apparatus used as another example may be, for example, a mobile phone, a tablet computer, and a laptop, etc. The apparatus is generally required to be light and thin, and can use a secondary battery as a power source.

### I. Preparation method

### Examples

Examples of this application will be described hereinafter. The examples described below are exemplary and only used to explain this application, and should not be construed as a limitation on this application. If the specific technology or conditions are not specified in the examples, the technology or conditions described in the literature in this field or the product manual shall be followed. The used reagents or instruments without manufacturer indicated are all conventional products that may be purchased in the market.

### Example 1

### (1) Preparation of a composite separator:

A conductive material carbon nanotubes and a first binder PVDF were dissolved in a solvent N-methyl-2-pyrrolidone (NMP) at a mass ratio of 10:1 to obtain a conductive material slurry. The conductive material slurry was coated onto a surface on a side of a PE separator substrate via extrusion to prepare a conductive coating, and drying and slitting were performed after the coating to obtain the composite separator. In any direction perpendicular to a thickness direction of the composite separator, a difference between the width of the separator substrate and the width of the conductive coating is 6 mm.

### (2) Preparation of a positive electrode plate

A binder 3 wt% of PVDF was fully dissolved in NMP, and 3.0 wt% of conductive carbon black and a positive electrode active material 94 wt% of a Na₄Fe₃(PO₄)₂P₂O₇ were then added, stirred, and mixed uniformly to obtain a positive electrode slurry. The slurry was uniformly coated on a surface of an aluminum foil that was a current collector to prepare a positive electrode film layer, and then the positive electrode active material was transferred to a vacuum drying oven and dried completely. A dried electrode plate was rolled and punched to obtain a positive electrode plate. In any direction perpendicular to the thickness direction of the composite separator, a difference between the width of the conductive coating and the width of the positive electrode film layer is 3 mm.

### (3) Preparation of a negative electrode plate

An aluminum foil was used as the negative electrode current collector, which underwent slitting and notching to prepare a negative electrode plate of an anode-free structure. In any direction perpendicular to the thickness direction of the composite separator, a difference between the width of the separator substrate and the width of the negative electrode current collector is 6 mm.

### (4) Electrolyte solution

In a glove box (in which H₂O < 0.1 ppm, and O₂ < 0.1 ppm) under an argon atmosphere, sodium salt sodium hexafluorophosphate NaPF₆ was dissolved in an organic solvent DME, and stirring was performed uniformly to obtain an electrolyte solution with a sodium salt concentration of 0.8 mol/L.

### (5) Preparation of a battery

The positive electrode plate, the composite separator, and the negative electrode plate were stacked sequentially such that the separator was disposed between the positive electrode plate and the negative electrode plate for separation, and the conductive coating in the composite separator faces the negative electrode plate. A bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain an anode-free sodium secondary battery product of Example 1.

### Example 2

### (1) Preparation of a composite separator:

An inorganic material Al₂O₃ and a second binder PVDF were dissolved in a solvent NMP at a mass ratio of 10:1 to obtain a ceramic material slurry. The ceramic material slurry was coated onto a surface on a side of a PE separator substrate via extrusion to prepare a ceramic coating, and drying and slitting were performed after the coating to obtain a composite separator precursor.

A conductive material carbon nanotubes and a first binder PVDF were dissolved in a solvent NMP at a mass ratio of 10:1 to obtain a conductive material slurry. The conductive material slurry was coated onto an upper surface of the ceramic coating in the composite separator precursor via extrusion to prepare a conductive coating (the ceramic coating is disposed between the separator substrate and the conductive coating), and drying and slitting were performed after the coating to obtain a composite separator. In any direction perpendicular to a thickness direction of the composite separator, a difference between the width of the separator substrate and the width of the conductive coating is 6 mm, and the width of the separator substrate is equal to the width of the ceramic coating.

### (2) Preparation of a positive electrode plate

A binder 3 wt% of PVDF was fully dissolved in NMP, and 3.0 wt% of conductive carbon black and a positive electrode active material 94 wt% of Na₄Fe₃(PO₄)₂P₂O₇ were then added, stirred, and mixed uniformly to obtain a positive electrode slurry. The slurry was uniformly coated on a surface of an aluminum foil that was a current collector to prepare a positive electrode film layer, and then the positive electrode film layer was transferred to a vacuum drying oven and dried completely. A dried electrode plate was rolled and punched to obtain a positive electrode plate. In any direction perpendicular to the thickness direction of the composite separator, a difference between the width of the conductive coating and the width of the positive electrode film layer is 3 mm.

### (3) Preparation of a negative electrode plate

An aluminum foil was used as the negative electrode current collector, which underwent slitting and notching to prepare a negative electrode plate of an anode-free structure. In any direction perpendicular to the thickness direction of the composite separator, a difference between the width of the separator substrate and the width of the negative electrode current collector is 6 mm.

### (4) Electrolyte solution

In a glove box (in which H₂O < 0.1 ppm, and O₂ < 0.1 ppm) under an argon atmosphere, the sodium salt sodium hexafluorophosphate NaPF₆ was dissolved in an organic solvent DME, and stirring was performed uniformly to obtain an electrolyte solution with a sodium salt concentration of 0.8 mol/L.

### (5) Preparation of a battery

The positive electrode plate, the composite separator, and the negative electrode plate were stacked sequentially such that the composite separator was disposed between the positive electrode plate and the negative electrode plate for separation, and the conductive coating in the composite separator faces the negative electrode plate. A bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain an anode-free sodium secondary battery product of Example 2.

### Examples 3 to 14

Preparation methods of batteries of Examples 3 to 14 are similar to that of the battery of Example 2, except that the preparation parameters of the composite separator and the secondary battery were adjusted. Specific parameters were shown in Table 1.

### Example 15

### (1) Preparation of a composite separator:

An inorganic material Al₂O₃ and a second binder PVDF were dissolved in a solvent NMP at a mass ratio of 10:1 to obtain a ceramic material slurry. The ceramic material slurry was coated onto a surface on one side of a PE separator substrate via extrusion to prepare a ceramic coating, and drying and slitting were performed after the coating to obtain a composite separator precursor.

A conductive material carbon nanotubes and a first binder PVDF were dissolved in a solvent NMP at a mass ratio of 10:1 to obtain a conductive material slurry. The conductive material slurry was coated onto a surface on the other side of the separator substrate in the composite separator precursor via extrusion to prepare a conductive coating (the ceramic coating and the conductive coating were respectively disposed on two sides of the separator substrate), and drying and slitting were performed after the coating to obtain the composite separator. In any direction perpendicular to a thickness direction of the composite separator, a difference between the width of the separator substrate and the width of the conductive coating is 6 mm, and the width of the separator substrate is equal to the width of the ceramic coating.

### (2) Preparation of a positive electrode plate

A binder 3 wt% of PVDF was fully dissolved in NMP, and 3.0 wt% of conductive carbon black and a positive electrode active material 94 wt% of Na₄Fe₃(PO₄)₂P₂O₇ were then added, stirred, and mixed uniformly to obtain a positive electrode slurry. The slurry was uniformly coated on a surface of an aluminum foil that was a current collector to prepare a positive electrode film layer, and then the positive electrode film layer was transferred to a vacuum drying oven and dried completely. A dried electrode plate was rolled and punched to obtain a positive electrode plate. In any direction perpendicular to the thickness direction of the composite separator, a difference between the width of the conductive coating and the width of the positive electrode film layer is 3 mm.

### (3) Preparation of a negative electrode plate

An aluminum foil was used as the negative electrode current collector, which underwent slitting and notching to prepare a negative electrode plate of an anode-free structure. In any direction perpendicular to the thickness direction of the composite separator, a difference between the width of the separator substrate and the width of the negative electrode current collector is 6 mm.

### (4) Electrolyte solution

In a glove box (in which H₂O < 0.1 ppm, and O₂ < 0.1 ppm) under an argon atmosphere, the sodium salt sodium hexafluorophosphate NaPF₆ was dissolved in an organic solvent DME, and stirring was performed uniformly to obtain an electrolyte solution with a sodium salt concentration of 0.8 mol/L.

### (5) Preparation of a battery

The positive electrode plate, the composite separator, and the negative electrode plate were stacked sequentially such that the composite separator was disposed between the positive electrode plate and the negative electrode plate for separation, the conductive coating in the composite separator faces the negative electrode plate, and the ceramic coating in the composite separator faces the positive electrode plate. A bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain an anode-free sodium secondary battery product of Example 15.

### Example 16

### (1) Preparation of a composite separator:

An inorganic material Al₂O₃ and a second binder PVDF were dissolved in a solvent NMP at a mass ratio of 10:1 to obtain a ceramic material slurry. The ceramic material slurry was coated onto surfaces on two sides of a PE separator substrate via extrusion to prepare a ceramic coating (the ceramic coating is disposed on two sides of the separator substrate), and drying and slitting were performed after the coating to obtain a composite separator precursor.

A conductive material carbon nanotubes and a first binder PVDF were dissolved in a solvent NMP at a mass ratio of 10:1 to obtain a conductive material slurry. The conductive material slurry was coated onto a surface on either side of the ceramic coating in the composite separator precursor via extrusion to prepare a conductive coating, and drying and slitting were performed after the coating to obtain the composite separator. The thicknesses of the ceramic coatings on two sides of the PE separator substrate are equal. The thickness of a single ceramic coating is 0.75 µm, and the areal density of the ceramic coating is 0.003 mg/1540.25 mm². The thickness of the conductive coating is 2 µm, and the areal density of the conductive coating is 2.622 mg/1540.25 mm². The thermal shrinkage rate of the composite separator is 0.3. In any direction perpendicular to a thickness direction of the composite separator, a difference between the width of the separator substrate and the width of the conductive coating is 6 mm, and the width of the separator substrate is equal to the width of the ceramic coating.

### (2) Preparation of a positive electrode plate

A binder 3 wt% of PVDF was fully dissolved in NMP, and 3.0 wt% of conductive carbon black and a positive electrode active material 94 wt% of Na₄Fe₃(PO₄)₂P₂O₇ were then added, stirred, and mixed uniformly to obtain a positive electrode slurry. The slurry was uniformly coated on a surface of an aluminum foil that was a current collector to prepare a positive electrode film layer, and then the positive electrode film layer was transferred to a vacuum drying oven and dried completely. A dried electrode plate was rolled and punched to obtain a positive electrode plate. In any direction perpendicular to the thickness direction of the composite separator, a difference between the width of the conductive coating and the width of the positive electrode film layer is 3 mm.

### (3) Preparation of a negative electrode plate

An aluminum foil was used as the negative electrode current collector, which underwent slitting and notching to prepare a negative electrode plate of an anode-free structure. In any direction perpendicular to the thickness direction of the composite separator, a difference between the width of the separator substrate and the width of the negative electrode current collector is 6 mm.

### (4) Electrolyte solution

In a glove box (in which H₂O < 0.1 ppm, and O₂ < 0.1 ppm) under an argon atmosphere, the sodium salt sodium hexafluorophosphate NaPF₆ was dissolved in an organic solvent DME, and stirring was performed uniformly to obtain an electrolyte solution with a sodium salt concentration of 0.8 mol/L.

### (5) Preparation of a battery

The positive electrode plate, the composite separator, and the negative electrode plate were stacked sequentially such that the composite separator was disposed between the positive electrode plate and the negative electrode plate for separation, and the conductive coating in the composite separator faces the negative electrode plate. A bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain an anode-free sodium secondary battery product of Example 16.

### Comparative example 1

A preparation method of a battery in Comparative example 1 is basically similar to that in Example 1. However, the composite separator includes only a separator substrate, but does not include a conductive coating and a ceramic coating. Specific parameters are shown in Table 1.

### Comparative example 2

### (1) Preparation of a composite separator:

An inorganic material Al₂O₃ and a second binder PVDF were dissolved in a solvent NMP at a mass ratio of 10:1 to obtain a ceramic material slurry. The ceramic material slurry was coated onto a surface on a side of a PE separator substrate via extrusion to prepare a ceramic coating (the ceramic coating is disposed on either side of the separator substrate), and drying and slitting were performed after the coating to obtain the composite separator. The thickness of the ceramic coating is 1.5 µm, and the areal density of the ceramic coating is 0.003 mg/1540.25 mm². The thermal shrinkage rate of the composite separator is 0.4. In any direction perpendicular to the thickness direction of the composite separator, the width of the separator substrate is equal to the width of the ceramic coating.

### (2) Preparation of a positive electrode plate

A binder 3 wt% of PVDF was fully dissolved in NMP, and 3.0 wt% of conductive carbon black and a positive electrode active material 94 wt% ofNa₄Fe₃(PO₄)₂P₂O₇ were then added, stirred, and mixed uniformly to obtain a positive electrode slurry. The slurry was uniformly coated on a surface of an aluminum foil that was a current collector to prepare a positive electrode film layer, and then the positive electrode film layer was transferred to a vacuum drying oven and dried completely. A dried electrode plate was rolled and punched to obtain a positive electrode plate. In any direction perpendicular to the thickness direction of the composite separator, a difference between the width of the separator substrate and the width of the positive electrode film layer is 9 mm.

### (3) Preparation of a negative electrode plate

An aluminum foil was used as the negative electrode current collector, which underwent slitting and notching to prepare a negative electrode plate of an anode-free structure. In any direction perpendicular to the thickness direction of the composite separator, a difference between the width of the separator substrate and the width of the negative electrode current collector is 6 mm.

### (4) Electrolyte solution

In a glove box (in which H₂O < 0.1 ppm, and O₂ < 0.1 ppm) under an argon atmosphere, the sodium salt sodium hexafluorophosphate NaPF₆ was dissolved in an organic solvent DME, and stirring was performed uniformly to obtain an electrolyte solution with a sodium salt concentration of 0.8 mol/L.

### (5) Preparation of a battery

The positive electrode plate, the composite separator, and the negative electrode plate were stacked sequentially such that the composite separator was disposed between the positive electrode plate and the negative electrode plate for separation, and the ceramic coating in the composite separator faces the negative electrode plate. A bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain an anode-free sodium secondary battery product of Comparative Example 2.

### II. Performance test

### 1. Performance test of a composite separator

### (1). Thermal shrinkage rate test

A composite separator with a length of 20 cm was taken and laid flat between two glass plates. The glass plates with the separator were placed at 110°C and allowed to stand for 7 h. The composite separator in the glass plates was taken out, and the length of the composite separator was measured as C1 (cm). Thermal shrinkage rate = (20 - C1)/20.

### (2) Areal density test

Areal density test of the conductive coating: During the Areal density test, a composite separator (the composite separator includes only a separator substrate and a conductive coating) with a specified area was taken at ambient temperature. A punching machine was used to punch a circular hole in the composite separator, with the area of the circular hole being 1540.25 mm². The mass m1 (unit: mg) of the circular hole section was then measured using an electronic balance. The separator substrate (a blank separator substrate) was then punched in the same manner, and the mass m2 (unit: mg) of the punched section was measured using the electronic balance. Finally, (m1-m2) was used as the areal density (unit: mg/1540.25 mm²) of the conductive coating.

Areal density test of the ceramic coating: During the areal density test, a composite separator (the composite separator includes a separator substrate, a ceramic coating, and a conductive coating) with a specified area was taken at ambient temperature. A punching machine was used to punch a circular hole in the separator substrate with the ceramic coating coated on the surface, with the area of the circular hole being 1540.25 mm². The mass m3 (unit: mg) of the circular hole section was then measured using an electronic balance. A composite separator that includes only the separator substrate and the conductive coating was then punched in the same manner, and the mass m4 (unit: mg) of the punched section was measured using the electronic balance. Finally, (m3-m4) was used as the areal density (unit: mg/1540.25 mm²) of the ceramic coating.

### 2. Battery performance test

### (1) Overpotential test

A process of the overpotential test was as follows: At 25°C, the battery was charged to 100 µA at a constant current of 0.1 C, and a minimum electrostatic potential obtained in this process was recorded as the overpotential.

### (2) Self-discharge test

The self-discharge test was as follows: At 25°C, the prepared battery was allowed to stand for 30 min, was subsequently charged to 3.2 V at a constant current of 0.33 C, and then was charged at a constant voltage of 3.2 V to a current down to 0.05 C. Next, after the battery was allowed to stand for 24 h, an open-circuit voltage V1 was tested, and after the battery was allowed to stand for 48 h, an open-circuit voltage V2 was tested. The self-discharge = (V1 - V2)/48. The test procedures for the comparative example and other examples were the same as above.

### (3) Cycle performance test

A process of the cycle performance test was follows: At 25°C, the prepared battery was allowed to stand for 30 min, was subsequently discharged to 3.65 V at a constant current of 0.33 C, and then was charged at a constant voltage of 3.65 V to a current down to 0.05 C. After being allowed to stand for 1 h, the battery was discharged to 2.5 V at a constant current of 0.33 C to obtain an initial capacity (C0). After being allowed to stand for 1 h, the battery was then charged to 3.65 V at a constant current of 0.33 C, and was subsequently charged at a constant voltage of 3.65 V to a current down to 0.05 C. After being allowed to stand for 1 h, the battery was discharged to 2.5 V at a constant current of 0.33 C to obtain a process capacity (C1). The above steps were repeated on the same battery, and a process capacity (Cn) of the battery after an n^{th} cycle was recorded. A cycle count n was recorded until Cn/C1 = 80%. The test procedures for the comparative example and other examples were the same as above.

### (4) Sodium dendrite test

The foregoing battery after n cycles was disassembled in a glove box (in which H₂O < 0.1 ppm, and O₂ < 0.1 ppm) under an argon atmosphere, the morphology of the surface of the negative electrode plate was visually observed to determine whether sodium dendrites were generated. When the negative electrode plate has no white spots, it is determined that no sodium dendrite occurs. When the negative electrode plate has sporadic white spots, it is determined that slight sodium dendrites occur. When the negative electrode plate has very dense white spots, it is determined that severe sodium dendrites occur. The test procedures for the comparative example and other examples were the same as above.

### III. Analysis of test results of examples and comparative examples

In accordance with the above methods, the batteries of the examples and comparative examples were prepared, and tested for various performance parameters. The results are shown in Table 1 and Table 2 below.

**Table 1**

| Serial No. | Composite separator | | | | | | | | | | |
|---|---|---|---|---|---|---|---|---|---|---|---|
| | Conductive coating | | | | | Ceramic coating | | | | | Separator substrate |
| | Conductive material | Binder | Mass ratio of the conductive material to the binder | Thickness /µm | Areal density mg/1540.25 mm² | Inorganic material | Binder | Mass ratio of the ceramic material to the binder | Thickness/ µm | Areal density mg/1540.25 mm² | |
| Example 1 | Carbon nanotubes | PVDF | 10:1 | 2 | 2.622 | / | / | / | / | / | PE |
| Example 2 | Carbon nanotubes | PVDF | 10:1 | 2 | 2.622 | Al₂O₃ | PVDF | 10:1 | 1.5 | 0.003 | PE |
| Example 3 | Carbon nanotubes | PVDF | 10:1 | 0.05 | 0.066 | Al₂O₃ | PVDF | 10:1 | 1.5 | 0.003 | PE |
| Example 4 | Carbon nanotubes | PVDF | 10:1 | 0.5 | 0.667 | Al₂O₃ | PVDF | 10:1 | 1.5 | 0.003 | PE |
| Example 5 | Carbon nanotubes | PVDF | 10:1 | 5 | 6.667 | Al₂O₃ | PVDF | 10:1 | 1.5 | 0.003 | PE |
| Example 6 | Carbon nanotubes | PVDF | 10:1 | 10 | 13.333 | Al₂O₃ | PVDF | 10:1 | 1.5 | 0.003 | PE |
| Example 7 | Super P | PVDF | 10:1 | 2 | 2.667 | Al₂O₃ | PVDF | 10:1 | 1.5 | 0.003 | PE |
| Example 8 | Natural graphite | PVDF | 10:1 | 2 | 2.868 | Al₂O₃ | PVDF | 10:1 | 1.5 | 0.003 | PE |
| Example 9 | Carbon nanotubes+ Super P (1:1) | PVDF | 10:1 | 2 | 2.717 | Al₂O₃ | PVDF | 10:1 | 1.5 | 0.003 | PE |
| Example 10 | Carbon nanotubes+ natural graphite (1:1) | PVDF | 10:1 | 2 | 2.782 | Al₂O₃ | PVDF | 10:1 | 1.5 | 0.003 | PE |
| Example 11 | Carbon nanotubes | PVDF | 10:1 | 2 | 2.622 | Al₂O₃ | PVDF | 10:1 | 0.05 | 0.0001 | PE |
| Example 12 | Carbon nanotubes | PVDF | 10:1 | 2 | 2.622 | Al₂O₃ | PVDF | 10:1 | 0.5 | 0.001 | PE |
| Example 13 | Carbon nanotubes | PVDF | 10:1 | 2 | 2.622 | Al₂O₃ | PVDF | 10:1 | 3 | 0.006 | PE |
| Example 14 | Carbon nanotubes | PVDF | 10:1 | 2 | 2.622 | Al₂O₃ | PVDF | 10:1 | 10 | 0.02 | PE |
| Example 15 | Carbon nanotubes | PVDF | 10:1 | 2 | 2.622 | Al₂O₃ | PVDF | 10:1 | 1.5 | 0.003 | PE |
| Example 16 | Carbon nanotubes | PVDF | 10:1 | 2 | 2.622 | Al₂O₃ | PVDF | 10:1 | 1.5 | 0.003 | PE |
| Comparative example 1 | / | / | / | / | / | / | / | / | / | / | PE |
| Comparative example 2 | / | / | / | / | / | Al₂O₃ | PVDF | 10:1 | 1.5 | 0.003 | PE |

**Table 2**

| Serial No. | Separator substrate | Battery | | | |
|---|---|---|---|---|---|
| | Thermal shrinkage rate/% | Overpotential/mV | Self-discharge mV/h | Cycle count/Cycles at a capacity retention rate of 80% | Sodium dendrites |
| Example 1 | 2.8 | 13 | 0.055 | 1450 | No |
| Example 2 | 0.3 | 13 | 0.038 | 1500 | No |
| Example 3 | 0.27 | 20 | 0.045 | 1230 | Slight |
| Example 4 | 0.29 | 14 | 0.039 | 1480 | No |
| Example 5 | 0.22 | 12 | 0.035 | 1400 | No |
| Example 6 | 0.21 | 12 | 0.032 | 1390 | No |
| Example 7 | 0.3 | 13 | 0.038 | 1350 | No |
| Example 8 | 0.3 | 15 | 0.038 | 1270 | No |
| Example 9 | 0.3 | 13 | 0.038 | 1400 | No |
| Example 10 | 0.3 | 14 | 0.038 | 1380 | No |
| Example 11 | 2.2 | 13 | 0.047 | 1500 | No |
| Example 12 | 1.6 | 13 | 0.042 | 1500 | No |
| Example 13 | 0.2 | 13 | 0.035 | 1500 | No |
| Example 14 | 0.2 | 13 | 0.033 | 1500 | No |
| Example 15 | 0.3 | 13 | 0.045 | 1500 | No |
| Example 16 | 0.3 | 13 | 0.037 | 1500 | No |
| Comparative example 1 | 3.2 | 35 | 0.064 | 400 | Severe |
| Comparative example 2 | 0.4 | 35 | 0.052 | 420 | Severe |

The composite separators in Examples 1 to 16 each include a separator substrate and a conductive coating disposed on a side of the separator substrate. It can be seen from the comparison of Example 1 with Comparative example 1 and Examples 2 to 16 with Comparative example 2 that the composite separator includes the conductive coating, which is conducive to reducing an overpotential of a battery including same, improving the cycle performance of the battery including same, and alleviating sodium dendrites in the battery including same, thereby improving the safety performance and electrochemical performance of the battery.

It can be seen from the comparison of Examples 2 to 16 with Example 1 that the composite separator further includes the ceramic coating disposed on at least one side of the separator substrate, which is conducive to improving the thermal shrinkage rate of the composite separator. When the ceramic coating is disposed between the separator substrate and the conductive coating, the self-discharge of the battery can be reduced.

It can be seen from the comparison of Examples 2 to 6 with Comparative example 2 that the thickness of the conductive coating is controlled within 0.05 µm to 10 µm, which is conducive to reducing the overpotential of the battery, improving the cycle performance of the battery, and alleviating sodium dendrites in the battery. It can be seen from the comparison of Examples 2, 4, and 5 with Examples 3 and 6 that the thickness of the conductive coating is further controlled within 0.5 µm to 5 µm such that the cycle performance of the battery can be further significantly improved.

It can be seen from the comparison of Examples 2 and 7 to 10 with Comparative example 2 that the conductive material in the conductive coating includes one or more of Super P, natural graphite, and carbon nanotubes, which are all conducive to reducing the overpotential of the battery, improving the cycle performance of the battery, and alleviating sodium dendrites in the battery.

It can be seen from the comparison of Examples 2 and 11 to 14 with Comparative example 2 that the thickness of the ceramic coating is controlled within 0.05 µm to 10 µm, which is conducive to reducing the overpotential of the battery, improving the cycle performance of the battery, and alleviating sodium dendrites in the battery.

It should be noted that this application is not limited to the above-mentioned embodiments. The foregoing embodiments are exemplary only, and any embodiment within the scope of the technical solution of this application that has substantially the same composition and has the same effects as the technical idea is encompassed in the technical scope of this application. In addition, other embodiments constructed by applying various modifications conceivable to those skilled in the art to the embodiments and combining some of the constituent elements of the embodiments without departing from the scope of the essence of this application are also included in the scope of this application.

## Claims

1. A composite separator, wherein the composite separator comprises a separator substrate and a conductive coating disposed on a side of the separator substrate.

2. The composite separator according to claim 1, wherein the composite separator further comprises a ceramic coating disposed on at least one side of the separator substrate, and the ceramic coating is disposed between the separator substrate and the conductive coating; and/or
the ceramic coating is disposed on a side of the separator substrate that is away from the conductive coating.

3. The composite separator according to claim 1 or 2, wherein a thickness of the conductive coating ranges from 0.05 µm to 10 µm, and optionally ranges from 0.5 µm to 5 µm.

4. The composite separator according to any one of claims 1 to 3, wherein an areal density of the conductive coating ranges from 0.01 mg/1540.25 mm² to 15 mg/1540.25 mm², and optionally ranges from 0.05 mg/1540.25 mm² to 8 mg/1540.25 mm².

5. The composite separator according to any one of claims 1 to 4, wherein the conductive coating comprises a conductive material, and the conductive material comprises at least one of a conductive carbon material and a conductive polymer.

6. The composite separator according to claim 5, wherein the conductive carbon material comprises at least one of a zero-dimensional carbon material, a one-dimensional carbon material, and a two-dimensional carbon material, and optionally comprises the one-dimensional carbon material.

7. The composite separator according to claim 6, wherein the zero-dimensional carbon material comprises at least one of acetylene black, Super P, and Ketjen black;
the one-dimensional carbon material comprises at least one of carbon nanofibers, carbon nanotubes, carbon nanohorns, and carbon nanorods, and optionally comprises carbon nanotubes; and
the two-dimensional carbon material comprises at least one of natural graphite and artificial graphite.

8. The composite separator according to any one of claims 2 to 7, wherein a thickness of the ceramic coating ranges from 0.05 µm to 10 µm, and optionally ranges from 0.5 µm to 3 µm.

9. The composite separator according to any one of claims 2 to 8, wherein an areal density of the ceramic coating ranges from 0.0001 mg/1540.25 mm² to 0.05 mg/1540.25 mm², and optionally ranges from 0.001 mg/1540.25 mm² to 0.02 mg/1540.25 mm².

10. The composite separator according to any one of claims 2 to 9, wherein the ceramic coating comprises an inorganic material, and the inorganic material comprises one or more of Al₂O₃, AlO(OH), SiO₂, TiO₂, MgO, and CaO, and optionally comprises Al₂O₃.

11. The composite separator according to any one of claims 2 to 10, wherein the conductive coating and/or the ceramic coating further comprises a binder, and the binder comprises one or more of polyvinylidene fluoride (PVDF), carboxymethylcellulose sodium, styrene-butadiene rubber (SBR), potassium carboxymethyl cellulose, polyacrylate, polyamide, polyimide, polyamide-imide, sodium alginate (SA), polyvinyl alcohol (PVA), polytetrafluoroethylene (PTFE), and polyacrylonitrile, and optionally comprises PVDF.

12. The composite separator according to claim 11, wherein the binder in the conductive coating is the same as the binder in the ceramic coating.

13. The composite separator according to claim 11 or 12, wherein a mass ratio of the conductive material to the binder in the conductive coating ranges from 4 to 49.

14. The composite separator according to any one of claims 11 to 13, wherein a mass ratio of the inorganic material to the binder in the ceramic coating ranges from 4 to 40.

15. The composite separator according to any one of claims 1 to 14, wherein the separator substrate comprises one or more of polyethylene (PE), polypropylene (PP), polyester, cellulose, polyimide, polyamide, spandex fibers, and aramid fibers, and optionally comprises PE.

16. The composite separator according to any one of claims 2 to 15, wherein the separator substrate comprises PE, the ceramic coating comprises Al₂O₃, and the conductive coating comprises carbon nanotubes.

17. The composite separator according to any one of claims 1 to 16, wherein in any direction perpendicular to a thickness direction of the composite separator, a width of the conductive coating is less than a width of the separator substrate.

18. The composite separator according to any one of claims 1 to 17, wherein in any direction perpendicular to the thickness direction of the composite separator, the width of the conductive coating is less than or equal to a width of the ceramic coating, and the width of the ceramic coating is less than or equal to the width of the separator substrate.

19. A secondary battery, comprising a negative electrode plate and the composite separator according to any one of claims 1 to 18, wherein the conductive coating in the composite separator is disposed on a side facing the negative electrode plate.

20. The secondary battery according to claim 19, wherein the secondary battery is an anode-free sodium secondary battery.

21. The secondary battery according to claim 19 or 20, wherein the negative electrode plate comprises a negative electrode current collector, and in any direction perpendicular to the thickness direction of the composite separator, the width of the conductive coating is less than or equal to a width of the negative electrode current collector, and the width of the negative electrode current collector is less than the width of the separator substrate.

22. The secondary battery according to any one of claims 19 to 21, wherein the secondary battery further comprises a positive electrode plate, and the positive electrode plate comprises a positive electrode current collector and a positive electrode film layer disposed on a side of the positive electrode current collector that faces the composite separator; and
in any direction perpendicular to the thickness direction of the composite separator, a width of the positive electrode film layer is less than the width of the conductive coating, and the width of the conductive coating is less than the width of the separator substrate.

23. The secondary battery according to claim 22, wherein in any direction perpendicular to the thickness direction of the composite separator, a difference between the width of the conductive coating and the width of the positive electrode film layer ranges from 0 mm to 6 mm, a difference between the width of the negative electrode current collector and the width of the conductive coating ranges from 0 to 3 mm, and a difference between the width of the separator substrate and the width of the negative electrode current collector ranges from 1 mm to 9 mm.

24. The secondary battery according to any one of claims 19 to 23, wherein the composite separator comprises the ceramic coating, and in any direction perpendicular to the thickness direction of the composite separator, the width of the separator substrate is equal to the width of the ceramic coating.

25. A power consuming apparatus, comprising the secondary battery according to any one of claims 19 to 24.
